# EUROPÄISCHE PATENTSCHRIFT

(11) **EP 3 339 158 B1**
(45) Veröffentlichungstag und Bekanntmachung des Hinweises auf die Patenterteilung: **29.07.2020**
(21) Anmeldenummer: 17001938.4
(22) Anmeldetag: 27.11.2017
(51) Int. Cl.: B62M 9/10, B62M 9/12

(54) **KETTENRAD, MEHRFACH-KETTENRADANORDNUNG UND FAHRRADANTRIEB MIT EINER SOLCHEN MEHRFACH-KETTENRADANORDNUNG**
SPROCKET, MULTI-GEAR SPROCKET ASSEMBLY AND BICYCLE TRANSMISSION WITH SUCH A MULTI-GEAR SPROCKET ASSEMBLY
PIGNON, DISPOSITIF À PLUSIEURS PIGNONS ET ENTRAÎNEMENT PAR ROUE PORTEUSE DOTÉ D'UN TEL DISPOSITIF À PLUSIEURS PIGNONS

(30) Priorität: 23.12.2016 DE 102016015433
(43) Veröffentlichungstag der Anmeldung: 27.06.2018
(73) Patentinhaber: SRAM Deutschland GmbH, 97424 Schweinfurt (DE)
(72) Erfinder: Vonend, Andreas, 97421 Schweinfurt (DE)

(56) Entgegenhaltungen:
- EP-A1- 2 810 864
- EP-A1- 3 009 339
- JP-A- 2000 355 295

## Beschreibung

Die Erfindung betrifft ein Kettenrad, eine Mehrfach-Kettenradanordnung zur Montage an einer Hinterradnabe mit einem solchen Kettenrad und einen Fahrradantrieb mit einer solchen Mehrfach-Ritzelanordnung.

In dem Dokument DE 10 2012 023 819 A1 ist ein vorderes Kettenblatt zur Anbringung an einer Tretkurbel eines Fahrrads beschrieben, das sich durch eine verbesserte Kettenführung gegenüber konventionellen Kettenblättern auszeichnet. Die verbesserten Führungseigenschaften ermöglichen, dass bei einem Einsatz eines einzigen solchen Kettenblatts an einer Tretkurbel eines Fahrrades auf zusätzliche Kettenführungen verzichtet werden kann. Die verbesserten Führungseigenschaften werden vor allem dadurch erreicht, dass das Kettenblatt in Achsrichtung der Tretkurbel betrachtet dicke und dünne Zähne aufweist, die in Umfangsrichtung alternierend angeordnet sind. Für den Einsatz an einer Hinterradnabe sind die genannten Kettenblätter ungeeignet, weil die außerordentlich guten Kettenführungseigenschaften einem Umlegen auf ein benachbartes Kettenrad entgegenstehen.

Ähnliche vordere Kettenblattanordnungen sind aus der US 2014/0338494 A1, DE 10 2014 019 528 A1, DE 10 2015 006 582 A1 und DE 10 2015 000 715 A1 bekannt. Alle diese Dokumente zeigen vordere Kettenblätter mit unterschiedlich ausgestalteten Zähnen, wobei es bei diesen Ausgestaltungen insbesondere um eine stabile Kettenführung geht. Schaltvorgänge an Mehrfach-Kettenblattanordnungen einer Tretkurbel und damit verbundene Anforderungen unterscheiden sich wesentlich von denen einer Mehrfach-Ritzelanordnung für eine Hinterradnabe eines Fahrrads. Im Falle eines treibenden Kettenblatts (an der Tretkurbel) wird die Kettenrolle jeweils von der Lastflanke des Kettenrades aufgenommen. Die Antriebsrichtung gibt vor, dass der Schaltvorgang im Lasttrum erfolgen muss. Bei einem Abtriebskettenrad, beispielsweise einem Ritzel einer an einem Fahrradhinterrad angebrachten Mehrfach-Ritzelanordnung, läuft die Kettenrolle jeweils auf oder nahe der Einlaufflanke im Leertrum des Antriebes ein. Die Kettenführung erfolgt durch die Schaltwerkzahnrolle, so dass die Einlaufsituation auf das betreffende Kettenrad keinen wesentlichen Schräglauf erfährt. Daraus ergeben sich vollkommen unterschiedliche Aufgabenstellungen für das Schalten und das Führen der Kette für ein hinteres Kettenrad (oder Ritzel) am Hinterrad eines Fahrrads und ein vorderes Kettenblatt an der Tretkurbel.

Dokument EP 2 810 864 A1 zeigt den Oberbegriff des Anspruchs 1.

Die Anzahl von Ritzeln an hinteren Mehrfach-Ritzelanordnungen hat in den letzten Jahren immer weiter zugenommen. Elf oder zwölf Ritzel in Kombination mit einem, zwei oder drei vorderen Kettenblättern stellen gängige Fahrradantriebe dar. Modernere Antriebe verwenden sogar dreizehn oder vierzehn Ritzel, meist in Kombination mit einem oder zwei vorderen Kettenblättern. Die erhöhte Anzahl von Ritzeln bringt allerdings auch Probleme mit sich. So erhöht sich mit der steigenden Anzahl von Ritzeln auch der Kettenschräglauf, welcher sich negativ auf die Laufeigenschaften und den Wirkungsgrad des Fahrradantriebs auswirkt. Der Kettenschräglauf ist besonders stark, wenn die Kette mit den kleinsten Ritzeln oder mit den größten Ritzeln in Eingriff steht. Den negativen Folgen des besonders starken Kettenschräglaufs auf den größten Ritzeln wird auf unterschiedliche Weise entgegengewirkt. So sind Maßnahmen bekannt, die dazu beitragen, die Kette besser zu Führen und Fehlschaltungen zu vermeiden.

Eine dieser Maßnahmen ist aus der DE 10 2015 219 522 A1 bekannt. Diese Mehrfach-Ritzelanordnung weist eine Folge von dünnen und dicken Zähnen auf. Dabei ist die axiale Breite der dicken Zähne so bemessen, dass sie zwar in den Zwischenraum eines Außenlaschenpaares eingreifen kann, nicht aber in den Zwischenraum eines Innenlaschenpaares. Die dünnen Zähne können sowohl mit einem Außenlaschenpaar, als auch einem Innenlaschenpaar in Eingriff gebracht werden. Eine solche Anordnung verbessert das Führungsverhalten der Kette, ohne dabei die Schaltfähigkeit zu beeinträchtigen. Problematisch bei diesen bekannten Mehrfach-Ritzelanordnungen ist jedoch die Herstellung, welche teuer und zeitaufwändig ist. Üblicherweise werden solche Ritzel mit dicken und dünnen Zähnen durch spanende Fertigung, insbesondere Fräsen oder Drehen, erzeugt. Das heißt, das verwendete Ausgangsmaterial weist mindestens eine axiale Breite auf, die der axialen Breite der dicken Zähne entspricht. Die dünnen Zähne werden dann durch Materialabtrag z. B. durch Fräsen erzeugt. Dieses Vorgehen ist sehr material- und zeitaufwändig und damit auch teuer.

Aus der EP 1 764 296 A1 sind Materialverformungen an Ritzeln einer Mehrfach-Ritzelanordnung bekannt. Allerdings erlaubt diese Anordnung weder eine verbesserte Kettenführung, noch ein zuverlässiges Schalten. Außer in den Schaltgassen, weisen alle Zähne der gezeigten Ritzel einen Vorsprung auf der Außenseite bzw. der dem nächstkleineren Ritzel zugewandten Seite auf. Die Zahndicke aller Zähne, sowohl der Zähne mit Verformung, als auch der Zähne ohne Verformung ist dabei so bemessen, dass diese sowohl in die Außen- als auch in die Innenlaschenpaare eingreifen können. Das Spiel zwischen den Zähnen, auch den Zähnen mit Vorsprung, und den Außenlaschen ist entsprechend groß und stellt keine ausreichende Führung der Kette auf den hinteren Ritzeln dar. Ferner sind fast alle Zähne mit einem Vorsprung versehen, der auf der Außenseite der Ritzel angebracht ist. Die Vorsprünge stören beim Schalten, weil die Kette mit den Vorsprüngen kollidieren kann. Ferner ist eine so große Anzahl von Vorsprüngen aufwändig zu fertigen.

Es stellt sich somit die Aufgabe, ein kostengünstiges und einfach zu fertigendes Kettenrad für eine hintere Mehrfach-Kettenradanordnung bereitzustellen, das sowohl ein zuverlässiges Schalten erlaubt, als auch genügend Führung für die Kette bereitstellt.

Gelöst wird diese Aufgabe mit einem Kettenrad für eine Mehrfach-Kettenradanordnung zur drehbaren Montage an einer Hinterradachse und zum Eingriff in eine Fahrradkette. Die Fahrradkette umfasst Ketteninnenlaschenpaare und Kettenaußenlaschenpaare. Das Kettenrad weist zwischen einer axialen Innenseite und einer gegenüberliegenden axialen Außenseite einen flachen Kettenradkörper auf. An einem Umfang des Kettenrads ist eine Vielzahl von Zähnen ausgebildet. Die Vielzahl von Zähnen umfasst mindestens einen Zahn einer ersten Zahngruppe, dessen axiale Breite größer als ein Ketteninnenlaschenabstand und kleiner als ein Kettenaußenlaschenabstand bemessen ist. Die Vielzahl von Zähnen umfasst weiter Zähne einer zweiten Zahngruppe, deren axiale Breite kleiner als der Ketteninnenlaschenabstand bemessen ist; wobei in Umfangsrichtung betrachtet mindestens eine Folge von drei Zähnen vorgesehen ist, bei der unmittelbar nacheinander ein Zahn der zweiten Zahngruppe, ein Zahn der ersten Zahngruppe und wieder ein Zahn der zweiten Zahngruppe angeordnet ist; wobei der mindestens eine Zahn der ersten Zahngruppe einen Vorsprung in axialer Richtung aufweist, der durch eine Materialverformung hergestellt ist.

Die axiale Innenseite des Kettenrads entspricht dabei der Seite, die in zusammengebautem Zustand der Mehrfach-Kettenradanordnung in Richtung des nächstgrößeren Kettenrads weist. Die Außenseite des Kettenrads weist entsprechend in Richtung des nächstkleineren Kettenrads.

Die Abfolge von einem dünnen, einem dicken und einem dünnen Zahn wirkt sich positiv auf die Kettenführung aus, weil die dicken Zähne die Lücke zwischen den Außenlaschen der Kette mehr ausfüllen, als die üblichen dünnen Zähne. Die Kette hat dadurch weniger Bewegungsfreiheit gegenüber dem Ritzel. Diese Abfolge kann sich entlang des Umfangs eines Ritzels mehrfach wiederholen.

Aufgrund der Herstellung des Vorsprungs durch eine Materialverformung kann das Kettenrad günstig und schnell gefertigt werden. Alle Vorsprünge können in einem Arbeitsschritt beispielsweise durch Prägen erstellt werden und müssen nicht einzeln nacheinander gefräst werden.

Gemäß einer Weiterbildung der Erfindung weist der Kettenradkörper eine axiale Breite B3 auf, die im Wesentlichen der axialen Breite B2 der Zähne der zweiten Zahngruppe entspricht. Damit ist die axiale Breite B3 des Kettenradkörpers geringer, als die axiale Breite B1 des mindestens einen Zahns der ersten Zahngruppe.

Vorteilhafterweise kann ein dünnes und leichtes Ausgangsmaterial genutzt werden.

In einem Ausführungsbeispiel beträgt die axiale Breite B1 des Zahns der ersten Zahngruppe 65 - 85 %, insbesondere 68 % des Kettenaußenlaschenabstands D1, und die axiale Breite B2 des Zahns der zweiten Zahngruppe 65 - 85 %, insbesondere 79 % des Ketteninnenlaschenabstands D2. Im Vergleich zum Stand der Technik, wo alle Zähne in etwas gleich breit und auf den Ketteninnenlaschenabstand abgestimmt sind, betrug der Füllgrad eines dünnen Zahns (hier 1,7 mm) bezogen auf den Kettenaußenlaschenabstand D1 lediglich 47 %. Dem gegenüber stellt der Füllgrad von 68 % der dicken Zähne des erfindungsgemäßen Kettenrads gegenüber dem Stand der Technik eine deutliche Verbesserung dar.

Die axiale Breite B1 des Zahns der ersten Zahngruppe ist dabei um 40 - 50%, insbesondere 47 %, größer bemessen als die axiale Breite B2 der Zähne der zweiten Zahngruppe.

Gemäß einer Weiterbildung der Erfindung ist der Vorsprung auf der Innenseite des Kettenrads ausgebildet. Genauer gesagt ist der Vorsprung auf der Innenseite des Zahns der ersten Zahngruppe ausgebildet. Die Innenseite entspricht dabei der Seite des Kettenrads, die in zusammengebautem Zustand der Mehrfach-Kettenradanordnung in Richtung des nächstgrößeren Kettenrads weist.

Die der Innenseite gegenüberliegende Außenseite des Kettenrads bzw. der Zähne ist frei von Vorsprüngen. Das heißt, die Vorsprünge befinden sich ausschließlich auf einer axialen Seite des Kettenrads. Dies hat den Vorteil, dass die Außenseite für Schaltgassen genutzt werden kann und die Kette beim Schalten nicht mit den Vorsprüngen auf der Innenseite kollidiert.

Gemäß einer Weiterbildung der Erfindung erstreckt sich der Vorsprung in radialer Richtung vom Zahnkopf des dicken Zahns bis zum Zahnfuß des dicken Zahns.

Gemäß einer Weiterbildung der Erfindung erstreckt sich der Vorsprung in radialer Richtung bis zum Fußkreisdurchmesser, aber nicht darüber hinaus.

Gemäß einer Weiterbildung der Erfindung weist der Vorsprung eine Fase an seinem radial äußeren Ende auf. Die Fase des Vorsprungs erstreckt sich in radialer Richtung bis zum Zahnkopf und geht in eine ebenfalls auf der Innenseite angeordnete Innenfase des Zahnkopfs über. Beide Fasen weisen den gleichen Fasenwinkel auf und bilden somit eine durchgehende Ebene.

Der Vorsprung weist von der Seite betrachtet eine polygonförmig, insbesondere rechteckige Form auf. Diese Form lässt sich leicht durch Materialverformung herstellen. Ferner bietet eine rechteckige Form genügend Führungsfläche für die Kette.

Gemäß einer Weiterbildung der Erfindung weist der Vorsprung in einer Schnittebene orthogonal zu einem Radialstrahl betrachtet einen u-förmigen oder v-förmigen Querschnitt auf. Diese Querschnittsform entsteht durch die Einprägung auf der einen Seite (Außenseite) und dem daraus entstehenden Vorsprung auf der gegenüberliegenden Seite (Innenseite). Insbesondere der u-förmige Querschnitt bietet eine gute Führungsfläche.

Gemäß einer Weiterbildung der Erfindung weist das Kettenrad auf der Innenseite jeweils eine Ausnehmung zur Aufnahme einer Ketteninnenlasche im Bereich der Zähne der zweiten Zahngruppe auf. Die Ausnehmung weist eine geringe axiale Breite B5 auf und wird vorzugsweise durch Prägen hergestellt.

Gemäß einer Weiterbildung der Erfindung ist eine Schaltgasse in Form einer Vertiefung auf der Außenseite des Kettenrads angeordnet. Insbesondere mehrere Vertiefungen unterschiedlicher Tiefe können eine Schaltgasse bilden. Die Vertiefungen werden insbesondere durch Prägen hergestellt.

Gemäß einer Weiterbildung der Erfindung wird der Vorsprung durch eine Materialverformung von der Außenseite zur Innenseite hin erzielt. Dadurch ergeben sich eine Einprägung auf der Außenseite und der Vorsprung auf der Innenseite.

Alternativ kann die Materialverformung auch von der Innenseite her erzielt werden. Dabei wird Material auf der Innenseite des Kettenrads durch Eindrücken seitlich aufgeworfen. Dies führt insbesondere zu zwei seitlichen Vorsprüngen neben der Prägestelle.

Gemäß einer Weiterbildung der Erfindung weist das Kettenrad eine gerade Anzahl von Zähnen auf.

Gemäß der Erfindung beträgt der Anteil der dicken Zähne an der Gesamtzahl der Zähne des Kettenrads weniger als 50 %. Bevorzugt beträgt der Anteil der dicken Zähne an der Gesamtzahl der Zähne des Kettenrads weniger als 40 %. Insbesondere beträgt der Anteil der dicken Zähne an der Gesamtzahl der Zähne des Kettenrads zwischen 37,5 % und 25 %.

Beispielsweise weisen an einem Kettenrad mit 42 Zähnen, 15 Zähne einen Vorsprung auf, der durch Materialverformung erzeugt wurde. Bei einem Kettenrad mit insgesamt 48 Zähnen, können 16 Zähne mit einem durch Materialverformung erzeugten Vorsprung versehen sein. Bei einem Kettenrad mit 50 Zähnen weisen insbesondere 18 Zähne Vorsprünge durch Materialverformung auf.

Die vorliegende Erfindung betrifft ferner eine Mehrfach-Kettenradanordnung zur Montage an einer Hinterradachse mit zumindest einem erfindungsgemäßen Kettenrad.

Gemäß einer Weiterbildung der Erfindung ist das zumindest eine erfindungsgemäße Kettenrad eines der großen Kettenräder der Mehrfach-Kettenradanordnung. Insbesondere ist das größte und/oder zweitgrößte Kettenrad der Vielzahl von Kettenrädern entsprechend dem erfindungsgemäßen Kettenrad ausgebildet Zumindest ein weiteres Kettenrad der Mehrfach-Kettenradanordnung ist frei von Vorsprüngen und unterscheidet sich damit von dem erfindungsgemäßen Kettenrad. Vorzugsweise weist das zumindest eine weitere Kettenrad eine ungerade Anzahl von Zähnen auf. Beispielsweise weist die erfindungsgemäße Mehrfach-Kettenradanordnung genau zwölf Kettenräder auf. Von den zwölf Kettenrädern entspricht das größte und/oder zweitgrößte Kettenrad dem erfindungsgemäßen Kettenrad. Die übrigen zehn kleineren Kettenräder entsprechen den weiteren Kettenrädern, die frei von Vorsprüngen sind.

Gemäß einer Weiterbildung der Erfindung ist das zumindest eine erfindungsgemäße Kettenrad als Einzelkettenrad ausgebildet.

Mit Einzelkettenrädern sind separat gefertigte Kettenräder gemeint, die zunächst gefertigt werden und in einem anschließenden Montageprozess zueinander positioniert werden. In der Regel werden solche Einzelkettenräder durch stanzen hergestellt. Diese unterscheiden sich von einstückig hergestellten Mehrfach-Ritzelanordnungen, welche meist gefräst werden und daher teuer und aufwendig zu fertigen sind. Insbesondere sind alle Kettenräder der erfindungsgemäßen Mehrfach-Kettenradanordnung als separate Einzelkettenräder ausgebildet.

Gemäß einer Weiterbildung der Erfindung reichen die Einzelkettenräder in radialer Richtung nicht bis an den Antreiber heran. Ein Drehmoment wird nicht direkt, sondern indirekt auf einen Antreiber übertragen. Eine indirekte Drehmomentübertragung ist mittels Spider möglich. Eine andere Möglichkeit ist die Ableitung des Drehmoments über die benachbarten Ritzel bis hin zu einem einzigen mit dem Antreiber drehmomentübertragend verbundenen Ritzel, üblicherweise handelt es sich dabei um das größte Ritzel. Auf diese Weise können die Kettenradkörper der Kettenräder, die kein Drehmoment übertragen, ringförmig ausgebildet sein und Gewicht gespart werden.

Gemäß einer Weiterbildung der Erfindung ist das Einzelkettenrad mit einem benachbarten Kettenrad mittels sich axial erstreckender Verbindungsmittel verbunden. Bei diesen Verbindungsmitteln handelt es sich insbesondere um Stifte.

Das Einzelkettenrad weist radial äußere Stift-Öffnungen zur Verbindung mit einem nächstgrößeren Ritzel auf. Weiter weist das Einzelkettenrad radial innere Stift-Öffnungen zur Verbindung mit einem nächstkleineren Kettenrad auf. Die radial äußeren und die radial inneren Stift-Öffnungen sind vom Fußkreisdurchmesser des Einzelkettenrads beabstandet und weiter innen angeordnet.

Gemäß einer Ausführungsform sind insbesondere alle Kettenräder der Mehrfach-Kettenradanordnung als separat gefertigte Einzelritzel ausgebildet und mit Stiften verbunden. Die Einzelritzel weisen jeweils einen radial äußern Lochkreis mit äußeren Stift-Öffnungen und einen radial inneren Lochkreis mit inneren Stift-Öffnungen auf. Die äußeren Stift-Öffnungen eines Einzelritzels sind auf die inneren Stift-Öffnungen des nächstgrößeren Ritzels abgestimmt. Die inneren Stift-Öffnungen des Einzel-ritzels sind entsprechend auf die äußeren Stift-Öffnungen des nächstkleineren Ritzels abgestimmt. Jeweils benachbarte Ritzel werden auf diese Weise mittels in die Stift-Öffnungen eingepresster Stifte miteinander verbunden. Ein von der Kette auf ein Kettenrad übertragenes Drehmoment wird über die Stiftverbindungen von einem zum nächsten Ritzel übertragen und schließlich über ein mit dem Antreiber drehmomentübertragend verbundenes Ritzel auf den Antreiber übertragen. Eine solche Mehrfach-Ritzelanordnung lässt sich besonders kostengünstig fertigen und ist besonders leicht.

Die vorliegende Erfindung betrifft weiterhin einen Fahrradantrieb mit einer erfindungsgemäßen Mehrfach-Ritzelanordnung, einem hinteren Schaltwerk, einer vorderen Kettenringanordnung mit mindestens einem Kettenring, insbesondere genau einem vorderen Kettenring und einer Fahrradkette. Die Fahrradkette ist mit dem Kettenring und einem Kettenrad der Mehrfach-Ritzelanordnung in Eingriff bringbar.

Alternativ zur Materialverformung könnten die Vorsprünge auch durch Materialauftrag erzeugt werden. Ein sich mit dem Grundmaterial gut verbindendes Material, z. B. Kunststoff, kann an den gewünschten Stellen aufgetragen werden. Dazu kann das Material entweder einseitig auf die Zähne der ersten Gruppe aufgetragen oder diese Zähne umspritzt werden. Für eine gesteigerte Festigkeit können insbesondere Verbundöffnungen an der ersten Gruppe von Zähnen bereitgestellt werden, durch die ein verflüssigtes Material gespritzt wird.

Alternativ könnten die Zähne der ersten Zahngruppe auch gegenüber den Zähnen der zweiten Zahngruppe in Umfangsrichtung eine Schrägstellung einnehmen, so dass sich ihre resultierende axiale Breite je nach Schrägstellung erhöht. Die tatsächliche axiale Breite der Zähne entspricht zwar weiter der Dicke des Rohmaterials des Kettenrads, allerdings erhöht sich durch die Schrägstellung die Eingriffsbreite in den Raum der Kettenlaschenpaare. Beispielsweise würde eine Drehung des Zahns gegenüber der Normallage um 90 Grad zu einer maximalen Schrägstellung und maximalen resultierenden Breite in axialer Richtung führen. Die Zahnlänge in Umfangsrichtung entspricht dann der resultierenden axialen Breite. Eine Drehung des Zahns um weniger als 90 Grad wäre aus Festigkeitsgründen zu bevorzugen.

Denkbar wäre auch eine Kombination aus Vorsprüngen, die durch Materialverformung, Schrägstellen oder Materialauftrag gefertigt wurden.

### Kurzbeschreibung der Zeichnungen:

- Fig. 1: Schematische Darstellung eines erfindungsgemäßen Fahrradantriebs
- Fig. 2: Teilschnitt durch eine Kette
- Fig. 3a: Außenansicht einer erfindungsgemäßen Mehrfach-Kettenradanordnung
- Fig. 3b: Innenansicht der erfindungsgemäßen Mehrfach-Kettenradanordnung aus Fig. 3a
- Fig. 4: Perspektivische Innenansicht der Mehrfach-Ritzelanordnung aus Fig. 3 ohne das größte Kettenrad
- Fig. 5a: Außenansicht eines erfindungsgemäßen Kettenrads
- Fig. 5b: Innenansicht des erfindungsgemäßen Kettenrads aus Fig. 5a
- Fig. 6: Vergrößerte Darstellung einer Zahnfolge des Kettenrads aus Fig. 5b.
- Fig. 7: Schematische Querschnitt-Ansicht der Zahnfolge aus Fig. 6
- Fig. 8: Vergrößerte Darstellung eines Querschnitts durch einen Zahn der ersten Zahngruppe
- Fig. 9: Vergrößerte Darstellung eines Längsschnitts durch einen Zahn der ersten Zahngruppe
- Fig. 10: Vergrößerte Darstellung eines Längsschnitts durch einen Zahn der zweiten Zahngruppe
- Fig. 11a: Außenansicht eines alternativen, erfindungsgemäßen Kettenrads
- Fig. 11b: Innenansicht eines vergrößerten Details aus Fig. 11a

### Detaillierte Beschreibung der bevorzugten Ausführungsformen

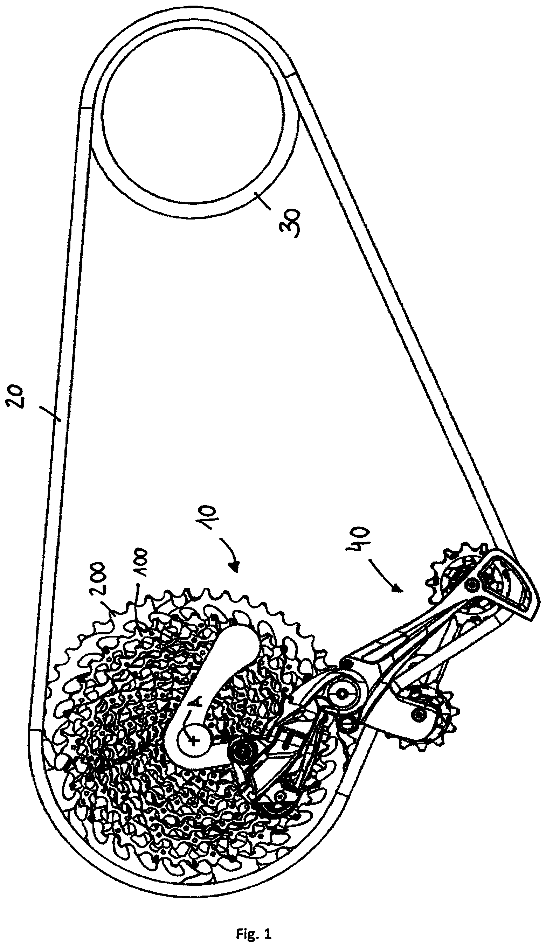

Figur 1 zeigt eine schematische Darstellung eines erfindungsgemäßen Fahrradantriebs. Die vordere Kettenblatt-Anordnung umfasst ein einzelnes Kettenblatt 30. Die Mehrfach-Ritzelanordnung 10 umfasst zwölf Ritzel mit einem größten Ritzel 200 und einem erfindungsgemäßen zweitgrößten Kettenrad 100. Das Kettenblatt 30 ist im Verhältnis zur Mehrfach-Ritzelanordnung 10 so ausgerichtet, dass eine neutrale Kettenlinie vorliegt, wenn die Kette 20 mit einem der mittleren Kettenräder in Eingriff steht. Die neutrale Kettenlinie entspricht in etwa dem idealen Verlauf der Kette, bei dem so gut wie kein Kettenschräglauf auftritt. Auf den kleinsten und größten Ritzeln ist der Kettenschräglauf entsprechend am Stärksten. In dem gezeigten Zustand steht die Fahrradkette 20 mit den Zähnen des Kettenblatts 30 und mit den Zähnen des größten Ritzels 200 der Mehrfach-Ritzelanordnung 10 in Eingriff. Mittels der Fahrradkette 20 wird eine Kraft vom vorderen Kettenblatt 30 auf die hintere Mehrfach-Ritzelanordnung 10 und von dort über einen Antreiber auf die Hinterradnabe übertragen. Das Schaltwerk 40 bewegt die Fahrradkette 20 beim Schalten von einem Ritzel auf ein benachbartes Ritzel. Das Schaltwerk kann dabei entweder mechanisch oder elektrisch bedient werden. Im gezeigten Ausführungsbeispiel mit nur einem Kettenblatt 30 entfällt der vordere Umwerfer. Bei Ausführungen mit mehreren Kettenblättern kann auch der vordere Umwerfer elektrisch, insbesondere kabellos betrieben werden.

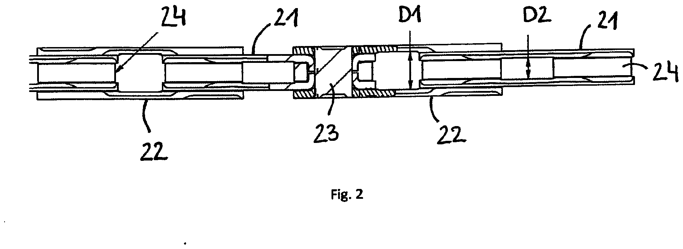

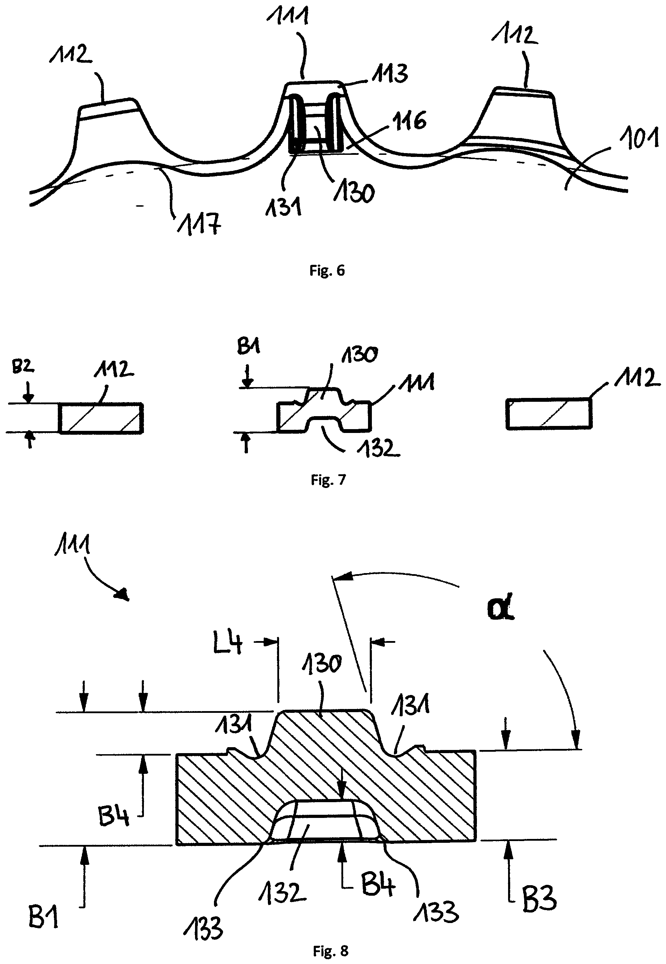

Figur 2 zeigt eine Draufsicht eines Teilschnitts durch eine Fahrradkette 20. Die Kette 20 besteht aus üblicherweise Ketteninnenlaschen 21 und Kettenaußenlaschen 22. Jeweils zwei gegenüberliegende Innenlaschen 21 bzw. Außenlaschen 22 bilden ein Innen- bzw. Außenlaschenpaar. Die Innenlaschen 21 und Außenlaschen 22 sind im Wechsel mit Kettenbolzen 23 gelenkig verbunden. Der Kettenbolzen 23 ist mit der Außenlasche 22 vernietet, was im geschnitten Bereich der Darstellung sichtbar wird. Auf den Krägen der Innenlaschen 21 sind Kettenrollen 24 drehbar gelagert - auch diese sind im Teilschnitt sichtbar. Die Ketteninnenlaschen 21 eines Ketteninnenlaschenpaars sind in einem axialen Abstand D2 zueinander angeordnet. Die Kettenaußenlaschen 22 eines Kettenaußenlaschenpaars sind in einem axialen Abstand D1 zueinander angeordnet. Dabei ist der Abstand D1 zwischen den Kettenaußenlaschen 22 größer, als der Abstand D2 zwischen den Ketteninnenlaschen 21. Diese Abstände D1 und D2 definieren den Eingriffsraum für die Zähne der Mehrfach-Ritzelanordnung. Im gezeigten Ausführungsbeispiel ist der Abstand D2 mit 2,16 mm und der Abstand D1 mit 3,65 mm bemessen. Um ein sauberes Eingreifen in die Kette 20 zu ermöglichen, müssen die axialen Breiten der Zähne der Mehrfach-Ritzelanordnung auf die Abstände D1 und D2 abgestimmt sein. Auf die axiale Breite der Zähne wird in Zusammenhang mit Figur 7 bis 10 genauer eingegangen.

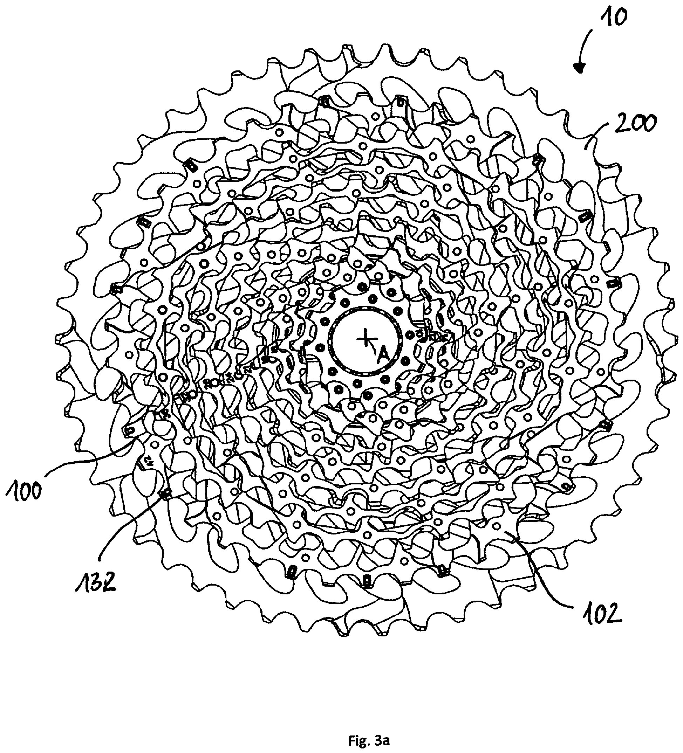

Figur 3a zeigt eine Außenansicht der ersten Ausführungsform der erfindungsgemäßen Mehrfach-Ritzelanordnung 10. Die gezeigte Mehrfach-Kettenradanordnung 10 weist zwölf Kettenräder auf. Die 50 Zähne des größten Ritzels 200 sind auf herkömmliche Weise durch Fräsen hergestellt. Es weist ebenfalls axial breitere Zähne 211 und weniger breite Zähne 212 auf. Bei dem zweitgrößten Ritzel 100 handelt es sich um ein erfindungsgemäßes Kettenrad 100 mit 42 Zähnen, wobei die Zähne der ersten Zahngruppe 111 einen Vorsprung 130 aufweisen, der durch Prägen erzeugt wurde. 15 Zähne der insgesamt 42 Zähne des Ritzels 100 weisen eine Einprägung 132 auf der Außenseite 102 bzw. einen Vorsprung 130 auf der Innenseite 101 auf. Die restlichen zehn kleineren Ritzel weisen keine Vorsprünge auf, ihre Zähne sind im Wesentlichen gleich breit.

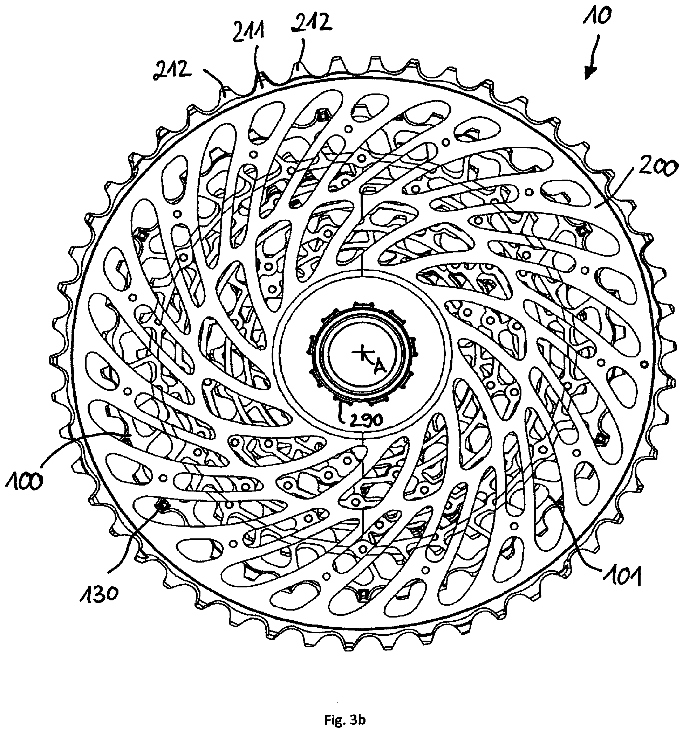

Figur 3b zeigt eine Innenansicht der Mehrfach-Ritzelanordnung 10 aus Figur 3a. Hier ist das größte Ritzel 200 besonders gut zu erkennen, das ebenfalls auf der Innenseite dicke Zähne 211 und dünne Zähne 212 aufweist. Wie aus dem Stand der Technik bekannt, werden die dünnen Zähne 212 durch Fräsen von Ausnehmungen hergestellt. Die dicken Zähen 211 und der Kettenradkörper entsprechen dabei in etwa der Materialdicke des Ausgangsmaterials. Um Gewicht einzusparen, ist das größte Ritzel 200 vorzugsweise aus Aluminium gefertigt. Das Ritzel 200 weist an seinem radial inneren Umfang ein Profil 290 zum Eingriff in ein entsprechendes Gegenprofil am Antreiber und zur Drehmomentübertragung auf diesen auf.

Um Gewicht und Kosten weiter zu reduzieren, könnte selbstverständlich auch das größte Kettenrad nach Vorbild des erfindungsgemäßen Kettenrads 100 gefertigt werden. Das heißt, der Kettenradkörper des größten Kettenrads würde der Materialdicke des Ausgangsmaterials und der axialen Breite der dünnen Zähne entsprechen. Die dicken Zähne würden durch Materialumformung hergestellt. Durch die Einsparung von Material und damit auch Gewicht, könnte das größte Kettenrad dann aus billigerem Stahl gefertigt werden.

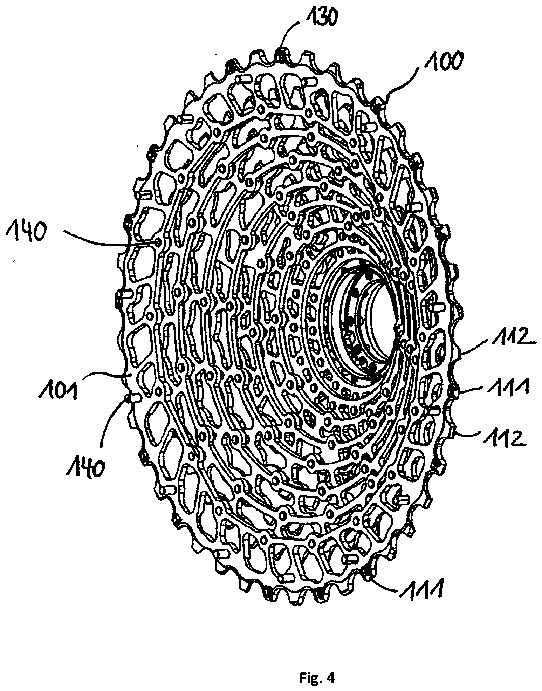

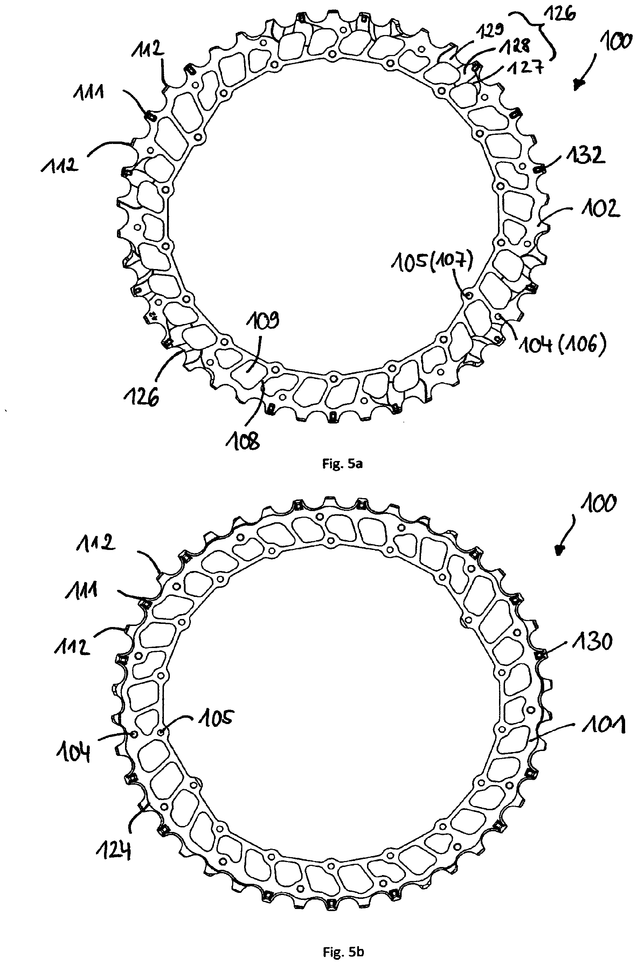

Figur 4 zeigt eine perspektivische Innenansicht der ersten Ausführungsform der Mehrfach-Ritzelanordnung 10 ohne das größte Ritzel 200. Hier wird die konische Struktur der Anordnung 10 sichtbar. Die zwölf Ritzel der Mehrfach-Ritzelanordnung 10 sind separat gefertigte Einzelritzel, die mit Hilfe von Stiften 140 verbunden sind. Dafür weisen alle Ritzel Stift-Öffnungen auf, in die die Stifte 140 eingepresst werden. Jedes Ritzel (außer dem größten und dem kleinsten Ritzel) umfasst einen radial äußeren Lochkreis mit äußeren Löchern 104 und einen radialen inneren Lochkreis mit inneren Löchern 105. Jedes Ritzel wird jeweils mit dem benachbarten nächstkleineren Ritzel über den inneren Lochkreis und mit dem benachbarten nächstgrößeren Ritzel über den äußeren Lochkreis verbunden. Beispielsweise ist das Ritzel 100 über seinen äußeren Lochkreis mit dem nächstgrößeren Ritzel 200 verbunden und über seinen inneren Lochkreis mit dem nächstkleineren Ritzel. Das größte Ritzel 200 weist nur einen inneren Lochkreis auf, da es nur mit dem nächstkleineren Ritzel 100 verbunden ist. Entsprechend weist das kleinste Ritzel nur einen äußeren Lochkreis auf, weil es nur mit dem nächstgrößeren Ritzel verbunden ist. Die Anzahl der Löcher je Lochkreis variiert. Es wird allerdings eine gleichmäßige Verteilung der Löcher über den Lochkreis angestrebt. Beispielsweise weist das Kettenrad 100 einen äußeren Lochkreis mit 15 gleichmäßig verteilten Löchern 104 und einen inneren Lochkreis mit 18 gleichmäßig verteilten Löchern 105 auf (vgl. dazu Figur 5a und 5b).

Die gezeigte Steckverbindung aus Stiften 140 erlaubt eine indirekte Übertragung des Drehmoments von dem mit der Kette in Eingriff stehenden Ritzel über das größte Ritzel 200 auf den Antreiber. Das heißt, die übrigen Kettenradkörper können sehr schmal und ringförmig ausgebildet sein und müssen nicht bis zum Antreiber heranreichen.

Figur 5a zeigt die Außenseite 102 des Kettenrads 100. Die Vorsprünge 130 weisen zwar auf die Innenseite 101, jedoch sind die Einprägungen 132 der Vorsprünge 130 auch hier gut zu erkennen. Auf der Außenseite 102 des Kettenblatts 100 sind die Schaltgassen 126 angeordnet. Die Schaltgassen 126 weisen mehrere Vertiefungen 127, 128, 129 unterschiedlicher Tiefe auf. Insbesondere besteht eine Schaltgasse 126 aus einer ersten Vertiefung 127 mit einer ersten Tiefe, aus einer zweiten Vertiefung 128 mit einer zweiten Tiefe und einer dritten Vertiefung 129 mit einer dritten Tiefe, wobei die dritte Vertiefung 129 tiefer als die zweite Vertiefung 128, und die zweite Vertiefung 128 tiefer als die erste Vertiefung 127 ausgebildet ist. Um die zur Materialverformung benötigten Kräfte zu reduzieren, werden Schaltgassen vorzugsweise aus mehreren unterschiedlich tiefen Vertiefungen gefertigt. Die Tiefe der Vertiefungen orientiert sich am schrägen Verlauf der Kette beim Wechsel zwischen zwei benachbarten Ritzeln. Da die Vorsprünge 130 auf die gegenüberliegende Innenseite 101 weisen, können sie auch im Bereich der Schaltgassen 126 angeordnet sein, ohne zu stören.

Figur 5b zeigt die Innenseite 101 des Kettenrads 100. Auf dieser Seite sind sowohl die Vorsprünge 130 der dicken Zähne 111 als auch die Ausnehmungen 124 im Bereich der dünnen Zähne 112 angeordnet. Die Ausnehmungen 124 sind optional und weisen eine Kontur auf, die der Kontur der taillierten Kettenlaschen entspricht. Die Ausnehmung 124 schafft zusätzlichen Platz für die Innenlaschen 21 und erleichtert damit das Schalten.

Die getrennte Anordnung von Vorsprüngen 130 auf der axialen Innenseite 101 und von Schaltgassen 126 auf der axialen Außenseite 102 erlaubt die Anordnung in den selben Umfangsbereichen. Solange die Kette 20 mit den Zähnen in Eingriff steht, wirken die Führungseigenschaften der Vorsprünge 130 auf der Innenseite 101 des Kettenrads 100. Wenn die Kette 20 beim Schalten mit den Zähnen außer Eingriff gebracht wird, kann sie entlang der axialen Außenseite 102 des Kettenrads 100 gleiten, ohne mit den Vorsprüngen 130 zu kollidieren. Die Vertiefungen der Schaltgassen 126 auf der Außenseite 102 geben der Kette 20 genügend axialen Raum beim Schalten.

Optional könnten die Zähne der ersten Zahngruppe nicht nur eine größere axiale Breite als die Zähne der zweiten Zahngruppe aufweisen, sondern in radialer Richtung auch höher als die Zähne der zweiten Zahngruppe ausgebildet sein.

Das Kettenrad 100 ist ringförmig ausgebildet und weist eine Vielzahl von Materialdurchbrüchen 109 auf, was zwischen dem äußeren und inneren Lochkreis zu stegförmigen Verbindungen 108 führt.

Die 15 äußeren Stift-Löcher 104 sind außerhalb der Vertiefungen der Schaltgassen 126 angeordnet, um das bereits dünnere Material nicht weiter zu schwächen. Außerdem sind die Stift-Löcher 104 radial weiter innen als der Fußkreisdurchmesser 117 angeordnet. Der äußere Lochkreisdurchmesser ist also kleiner als der Fußkreisdurchmesser 117.

Figur 6 zeigt eine vergrößerte Darstellung einer Folge von drei Zähnen des in Figur 5b dargestellten Kettenrads 100. Dabei folgt in Umfangsrichtung unmittelbar auf einen dünnen Zahn 112 ein dicker Zahn 111 und danach wieder ein dünner Zahn 112. Oder mit anderen Worten vor und nach jedem dicken Zahn 111 ist ein dünner Zahn 112 angeordnet. Diese Abfolge ist notwendig, um das richtige Eingreifen der Kette 20 zu gewährleisten. Da die axiale Breite B1 der dicken Zähne 111 so bemessen ist, dass sie in ein Außenlaschenpaar 22, aber nicht in ein Innenlaschenpaar 21 eingreifen kann, wird die Kette 20 entsprechend ausgerichtet. Der dicke Zahn 111 kann nur vollständig in ein Paar von Außenlaschen 22 eintauchen. Da die Außen- und Innenlaschen 22, 21 der Kette immer im Wechsel angeordnet sind, muss, um ein reibungsloses Eingreifen der Kette zu gewähren, vor und nach dem dicken Zahn 111 ein Zahn der zweiten Zahngruppe 112 angeordnet sein. Die dünnen Zähne 112 hingegen können sowohl in Paare von Innenlaschen, als auch Außenlaschen eingreifen und führen zu keiner zwangsläufigen Abfolge bzw. Ausrichtung.

Des Weiteren ist in der vergrößerten Darstellung der Innenseite 101 gut zu erkennen, dass sich der Vorsprung 130 vom Zahnkopf 113 bis zum Zahnfuß 116 erstreckt. Der Vorsprung 130 erstreckt sich aber nicht über den Fußkreisdurchmesser 117 hinaus. Die hier nicht gezeigten taillierten Außenlaschen der mit den dicken Zähnen 111 in Eingriff stehenden Kette gelangen nicht über den Fußkreisdurchmesser 117 hinaus. Von daher würde es zu keiner Wechselwirkung zwischen Kette und Vorsprung 130 kommen, so dass eine Erstreckung bis über den Fußkreisdurchmesser 117 hinaus nicht nötig ist. Die Vorsprünge 130 können klein gehalten werden. Die rechteckige Form der Vorsprünge 130 und die Länge L4 bieten aber dennoch genügend Fläche, um eine ausreichende Führung der Kettenaußenlaschen 22 sicherzustellen.

Außerdem bietet ein nicht über den Fußkreisdurchmesser 117 hinausragender Vorsprung 130 den Vorteil, dass sich die gestanzten und umgeformten Kettenräder 100 leicht zueinander verdreht stapeln lassen. Das erleichtert die Handhabung in der Herstellung und den Transport.

Figur 7 zeigt die Folge von Zähnen aus Figur 6 in einem schematischen Querschnitt. Hier wird die unterschiedliche axiale Breite der dicken Zähne 111 und dünnen Zähne 112 besonders deutlich. Die axiale Breite B1 der dicken Zähne 111 ist deutlich größer als die axiale Breite B2 der beiden benachbarten dünnen Zähne 112. Dabei entspricht die Breite B2 der dünnen Zähnen 112 in etwa der Breite des Ausgangsmaterials. Der durch die Materialverlagerung gebildete Vorsprung 130 auf der Innenseite 101 führt zu der vergrößerten Breite B1. Auf der Außenseite 102 ist die Einprägung 132 zu erkennen.

In der gezeigten Ausführungsform entspricht die axiale Breite B1 der dicken Zähne 111 etwa 2,5 mm und die axiale Breite B2 der dünnen Zähne 112 etwa 1,7 mm. Damit liegt die Differenz zwischen einem benachbarten dicken und dünnen Zahn 111, 112 bei 0,8 mm. Dieser Unterschied besteht aber nur auf der axialen Innenseite, auf der der Vorsprung 130 ausgebildet ist. Die axiale Breite B4 des Vorsprungs 130 ergibt sich aus der Differenz zwischen dem Innenlaschenabstand D2 und dem Außenlaschenabstand D1, welcher hier bei etwa 1,6 mm liegt. Da der Vorsprung 130 nur einseitig ausgebildet ist, wird diese Differenz durch zwei geteilt, was zu einem Vorsprung mit einer Breite von 0,8 mm führt. Die einseitige Anordnung des Vorsprungs 130 auf der Innenseite 101, sorgt für genügend Kettenführung, ohne das Schaltverhalten negativ zu beeinflussen.

Die in Zusammenhang mit Figur 2 und Figur 7 angegebenen Maße der Kette 20, insbesondere die axialen Abstände D1, D2 und die axialen Breiten B1 und B2 der Zähne 111,112, führen zu einem bestimmten Füllgrad der in die Kette eingreifenden Zähne. Die Zähne der ersten Zahngruppe 111 mit der axialen Breite B1 füllen den korrespondierenden axialen Abstand D1 der Außenlaschenpaare 22 zu etwa 65 % bis 85 % aus. Im gezeigten Ausführungsbeispiel liegt der Füllgrad des in ein Außenlaschenpaar 22 eingreifenden Zahns der ersten Zahngruppe 111 bei 68 %. Die Zähne der zweiten Zahngruppe 112 mit der axialen Breite B1 füllen den korrespondierenden axialen Abstand D2 der Innenlaschenpaare 21 ebenfalls zu etwa 65 % bis 85 % aus. Im gezeigten Ausführungsbeispiel liegt der Füllgrad des in ein Innenlaschenpaar 21 eingreifenden Zahns der zweiten Zahngruppe 112 bei etwa 79 %.

Figur 8 ist ein vergrößerter Querschnitt durch einen dicken Zahn 111. Der Schnitt verläuft orthogonal zum Radialstrahl. Der dicke Zahn 111 weist einen Vorsprung 130 auf einer axialen Seite, nämlich der Innenseite 101 des Zahns 111 auf. Der Vorsprung 130 wird durch Materialverformung, insbesondere Prägen erzeugt. Dafür wird ein Prägewerkzeug von der Außenseite 102 in Richtung Innenseite 101 auf das Kettenrad 100 gedrückt. Dabei verformt bzw. verlagert sich das Material in axialer Richtung von der Außen- zur Innenseite hin. In diesem Ausführungsbeispiel wird das Material so verformt, dass der Vorsprung 130 eine axiale Breite B4 von 0,8 mm aufweist. Dabei entspricht die Tiefe der Einprägung 132 auf der Außenseite 102 in etwa der axialen Breite B4 des Vorsprungs 130 auf der Innenseite 101. Das heißt, die Einprägung 132 auf der Außenseite 102 ist in etwa 0,8 mm tief und führt zu einem Vorsprung 130, der ebenfalls etwa 0,8 mm misst. Um eine besonders akkurate Ausformung des Vorsprungs 130 zu gewährleisten, könnte die Einprägung 132 etwas tiefer bemessen sein als die Breite B4 des resultierenden Vorsprungs 130. Eine etwas tiefere Einprägung 132 stellt sicher, dass genügend Material zur Formung des Vorsprungs 130 zur Verfügung steht. Der gezeigte im Schnitt u-förmig oder v-förmige Vorsprung 130 lässt sich besonders gut Prägen und Entformen. Die Länge L4 des Vorsprungs 130 ist auf die Länge der Laschenzwischenräume abgestimmt und muss kleiner als diese bemessen sein. Der gezeigte Vorsprung 130 weist insbesondere eine Länge L4 von etwa 1,7 mm auf. Die Seiten des Vorsprungs 130 haben einen schrägen Verlauf und stehen insbesondere in einem Winkel a von 105° zur Oberfläche des Kettenrads. Die Länge und die Schrägen der Einprägung 132 entsprechen ebenfalls in etwa denen des Vorsprungs 130. Die an der Innenseite 101 seitlich neben dem Vorsprung 130 verlaufenden Rillen 131 unterstützen ebenfalls die Prägbarkeit und stellen sicher, dass die an der Außenseite 102 gebildeten Kanten 133 der Einprägung 132 sauber ausgeformt werden.

Die axiale Gesamtbreite B1 des dicken Zahns 111 ergibt sich aus der Summe der axialen Breite B3 des Kettenradkörpers 120 und der axialen Breite B4 des Vorsprungs 130. Um Material zu sparen, entspricht die axiale Breite B3 des Kettenradkörpers 120 vorzugsweise der axialen Breite des Ausgangs-/bzw. Rohmaterials. Im gezeigten Ausführungsbeispiel ist die axiale Breite B1 mit 2,5 mm, die Breite B3 des Rohmaterials mit 1,8 mm und die axiale Breite B4 des Vorsprungs 130 mit 0,8 mm bemessen. Alle Maßangaben unterliegen den üblichen Fertigungstoleranzen.

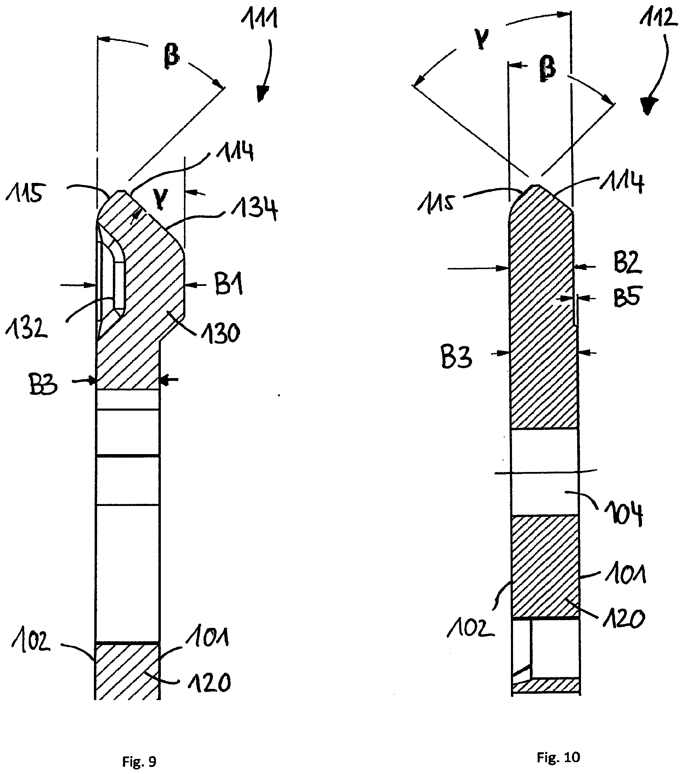

Figur 9 ist ein Längsschnitt durch den dicken Zahn 111. Wieder ist die Einprägung 132 auf der Außenseite 102 und der korrespondierende Vorsprung 130 auf der Innenseite 101 gut zu erkennen. Auch unterscheidet sich die axiale Breite B1 des dicken Zahns 111 deutlich von der axialen Breite B1 des übrigen Kettenradkörpers 120. In dieser Darstellung werden die Außenfase 115 und die Innenfase 114 am Zahnkopf des dicken Zahns 111 sichtbar. Die Außenfase 115 des dicken Zahns 111 ist dabei mit einem Winkel β von 45° bemessen. Die Innenfase 114 am Zahnkopf geht in die Fase 134 am Vorsprung 130 über - beide Fasen 114 und 134 weisen einen Winkel γ von 45° auf. Eine durchgehend von der Zahnspitze bis zur dicksten Stelle des Zahns 111 verlaufende Fase 114, 134 sorgt dafür, dass der Zahn 111 möglichst schnell in die Außenlasche 22 eingleitet und die optimale Führungsposition schnell erreicht wird.

Im Vergleich dazu zeigt Figur 10 einen Längsschnitt durch den dünnen Zahn 112. Die axiale Breite B2 des dünnen Zahns 112 entspricht im Wesentlichen der Breite B3 des Kettenradkörpers 120, also dem Ausgangsmaterial. Im gezeigten Ausführungsbeispiel weist der dünne Zahn 112 eine Ausnehmung 124 auf, deren Kontur an die Form der Kettenlaschen angelehnt ist. Die Ausnehmung 124 hat eine axiale Breite B5 mit einem Maß von 0,1 mm. In diesem Fall ist die axiale Breite B2 (1,7 mm) des dünnen Zahns 112 also um 0,1 mm geringer als die axiale Breite B3 (1,8 mm) des Kettenradkörpers 120. Auch der dünne Zahn 112 weist eine Außenfase 115 und eine Innenfase 114 am Zahnkopf auf. Die Außenfase 115 am dünnen Zahn 112 ist dabei mit einem Winkel β von ebenfalls 45° bemessen. Die Innenfase 114 des dünnen Zahns 112 hingegen weist einen Winkel γ von 50° auf. Außerdem ist ein äußeres Stift-Loch 104 sichtbar.

Es wäre denkbar die Zahnspitzen der dicken und dünnen Zähne in axialer Richtung versetzt zueinander anzuordnen.

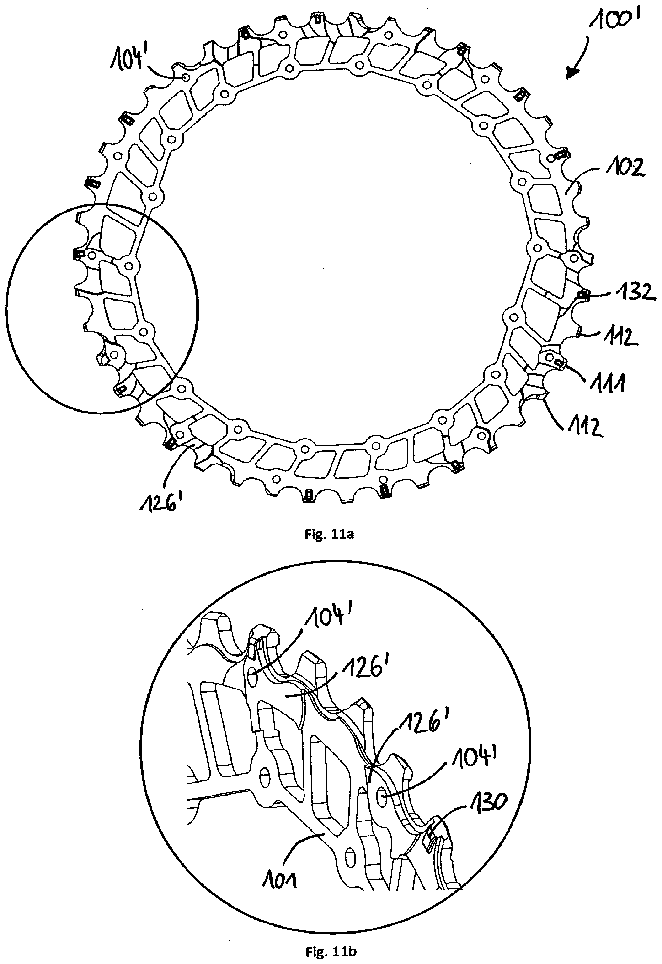

Figuren 11a und 11b zeigen eine Alternative zu der in Figur 5 gezeigten und beschriebenen Anordnung der Stift-Löcher 104. Figur 11a zeigt die Außenseite 102 eines Kettenrings 100' mit dicken und dünnen Zähnen 111, 112. In der alternativen Ausführungsform werden die Schaltgassen 126' zwar auch durch Prägen hergestellt, allerdings wird das Material von der Außenseite 101 auf die Innenseite 102 durchgedrückt. Das durchgedrückte Material der Schaltgassen 126' bzw. Vertiefung 127' ist besonders gut in der vergrößerten Detail-Ansicht der Innenseite 101 in Figur 11b zu erkennen. Die Materialdicke bzw. axiale Breite B3 des Kettenradkörpers 120 bleibt weiterhin erhalten. Auf der Innenseite 101, auf der auch die Vorsprünge 130 angeordnet sind, stört das zusätzliche Material der Schaltgassen 126' nicht.

Im Gegensatz dazu wurden die Schaltgassen 126 bzw. Vertiefungen der vorherigen Ausführungsform nur auf der Innenseite 101 durch Prägen hergestellt, sind aber auf der Außenseite 102 nicht sichtbar - das heißt, die Materialdicke im Bereich der Schaltgassen 126 ist geringer als die Dicke des Ausgangsmaterials B3. Dadurch konnte die Struktur im Bereich der Schaltgassen 126 nicht noch weiter durch die Pin-Löcher 104 geschwächt werden. Da in dieser alternativen Ausführungsform keine Materialschwächung im Bereich der Schaltgassen 126' auftritt, können die Pin-Löcher 104' innerhalb der Schaltgassen 126' angeordnet werden. Eine Verlagerung der Löcher aus dem Bereich der Schaltgassen ist nicht mehr nötig. Dank der wegfallenden Einschränkungen können weniger Pin-Löcher 104', in diesem Fall 14 anstelle von 15 Stift-Löchern 104, gleichmäßig entlang des äußeren Lochkreises 106' des Kettenrads 100' verteilt werden.

Grundsätzlich können mittels geeigneter Formwerkzeuge verschiedene Arten von Prägungen erzielt werden. Entweder drückt sich die Materialverformung von einer auf die andere Seite durch, so wie es bei den Vorsprüngen 130 und den Schaltgassen 126' der Fall ist (beidseitige Verformung), oder die Verformung findet nur auf einer ausgewählten Seite statt, wie es bei den Schaltgassen 126 und den Ausnehmungen 124 der Fall ist (einseitige Verformung). Die einseitige Verformung verlangt deutlich höhere Stanzkräfte als die beidseitige, weil das Material nicht ausweichen kann.

Ausgehend von der ursprünglichen Materialdicke werden zunächst die Zähne 110 und die Durchbrüche 109 der Kettenräder 100 grob vorgestanzt. Anschließend werden die Schaltgassen 126, Ausnehmungen 124 und Vorsprünge 130 geprägt. Diese Prägung kann in mehreren Schritten geschehen und führt zu der endgültigen Materialdicke. Abschließend werden die Zahnkonturen und die Kettenradkonturen noch einmal fein gestanzt.

## Patentansprüche

1. Kettenrad (100) für eine Mehrfach-Kettenradanordnung (10) zur drehbaren Montage an einer Hinterradachse (A) und zum Eingriff in eine Fahrradkette (20) mit Ketteninnenlaschenpaaren (21) und Kettenaußenlaschenpaaren (22),
- wobei das Kettenrad (100) zwischen einer axialen Innenseite (101) und einer gegenüberliegenden axialen Außenseite (102) einen flachen Kettenradkörper (120) und eine an einem Umfang des Kettenrads (100) ausgebildete Vielzahl von Zähnen (110) aufweist,
- wobei die Vielzahl von Zähnen (110) mindestens einen Zahn einer ersten Zahngruppe (111) umfasst, dessen axiale Breite (B1) größer als ein Ketteninnenlaschenabstand (D2) und kleiner als ein Kettenaußenlaschenabstand (D1) bemessen ist, und
- Zähne einer zweiten Zahngruppe (112) umfasst, deren axiale Breite (B2) kleiner als der Ketteninnenlaschenabstand (D2) bemessen ist,
- wobei in Umfangsrichtung betrachtet mindestens eine Folge von drei Zähnen (110) vorgesehen ist, bei der unmittelbar nacheinander ein Zahn der zweiten Zahngruppe (112), ein Zahn der ersten Zahngruppe (111) und wieder ein Zahn der zweiten Zahngruppe (112) angeordnet ist,
- wobei mindestens der eine Zahn der ersten Zahngruppe (111) einen Vorsprung (130) in axialer Richtung aufweist, der durch eine Materialverformung hergestellt ist, **dadurch gekennzeichnet,**
**dass** der Anteil der Zähne der ersten Zahngruppe (111) an der Gesamtzahl von Zähnen (110) weniger als 50 %, insbesondere weniger als 40 %, insbesondere zwischen 37,5 % und 25 % beträgt.

2. Kettenrad (100) nach Anspruch 1,
wobei der Kettenradkörper (120) eine axiale Breite (B3) aufweist, die im Wesentlichen der axialen Breite (B2) der Zähne der zweiten Zahngruppe (112) entspricht und geringer ist, als die axiale Breite (B1) des mindestens einen Zahns der ersten Zahngruppe (111).

3. Kettenrad (100) nach einem der vorhergehenden Ansprüche,
wobei der Vorsprung (130) auf der axialen Innenseite (101) des Kettenrads (100) ausgebildet ist.

4. Kettenrad (100) nach einem der vorhergehenden Ansprüche,
wobei sich der Vorsprung (130) in radialer Richtung von einem Zahnkopf (113) bis zu einem Zahnfuß (116) des mindestens einen Zahns der ersten Zahngruppe (111) erstreckt.

5. Kettenrad (100) nach einem der vorhergehenden Ansprüche,
wobei sich der Vorsprung (130) in radialer Richtung bis zum Fußkreisdurchmesser (117), aber nicht darüber hinaus erstreckt.

6. Kettenrad (100) nach einem der vorhergehenden Ansprüche,
wobei der Vorsprung (130) in einer Schnittebene orthogonal zu einem Radialstrahl betrachtet u-förmig oder v-förmig ausgebildet ist.

7. Kettenrad (100) nach einem der vorhergehenden Ansprüche,
wobei das Kettenrad (100) auf seiner Innenseite (101) jeweils eine Ausnehmung (124) zur Aufnahme einer Ketteninnenlasche (21) im Bereich der Zähne der zweiten Zahngruppe (112) aufweist.

8. Kettenrad (100) nach einem der vorhergehenden Ansprüche,
wobei das Kettenrad (100) auf seiner Außenseite (102) eine Schaltgasse (126) in Form von mindestens einer Vertiefung (127) aufweist.

9. Kettenrad (100) nach einem der vorhergehenden Ansprüche,
wobei die Materialverformung des ersten Vorsprungs (130) von der Innenseite (101) oder von der Außenseite (102) her erzeugt wird.

10. Kettenrad (100) nach einem der vorhergehenden Ansprüche,
wobei die Materialverformung des ersten Vorsprungs (130) durch Eindrücken, insbesondere Prägen, erzeugt wird.

11. Kettenrad (100) nach einem der vorhergehenden Ansprüche,
wobei das Kettenrad (100) eine gerade Gesamtzahl von Zähnen (110) umfasst.

12. Mehrfach-Kettenradanordnung (10) zur drehbaren Montage an einer Hinterradachse (A), wobei die Mehrfach-Kettenradanordnung (10) zumindest ein Kettenrad (100) nach einem der vorhergehenden Ansprüche umfasst.

13. Mehrfach-Kottenradanordnung (10) nach Anspruch 12,
wobei das zumindest eine Kettenrad (100) eines der großen Kettenräder, insbesondere das größte und/oder zweitgrößte Kettenrad der Mehrfach-Kettenradanordnung (10) ist.

14. Mehrfach-Kettenradanordnung (10) nach Anspruch 12 oder 13,
wobei das zumindest eine Kettenrad (100) als Elnzelkettenrad ausgebildet ist.

15. Mehrfach-Kettenradanordnung (10) nach Anspruch 14,
wobei das Einzelkettenrad mit einem benachbarten Kettenrad mittels sich axial erstreckender Verbindungsmittel, Insbesondere Stiften (140), verbunden Ist.

16. Mehrfach-Kettenradanordnung (10) nach Anspruch 15,
wobei das Einzelkettenrad radial äußere Stift-Öffnungen (104) zur Verbindung mit einem nächstgrößeren Kettenrad und/oder radial Innere Stift-Öffnungen (105) zur Verbindung mit einem nächstkleineren Kettenrad aufweist.

17. Fahrradantrieb umfassend:
- eine Mehrfach-Kettenradanordnung (10) nach einem der Ansprüche 12 bis 16,
- ein hinteres Schaltwerk (40),
- eine vordere Kettenringanordnung mit mindestens einem Kettenring (30), insbesondere genau einem vorderen Kettenring (30), und
- eine Fahrradkette (20), die mit dem Kettenring (30) und einem Kettenrad der Mehrfach-Ritzelanordnung (10) in Eingriff bringbar ist.

## Claims

1. Sprocket (100) for a multi-gear sprocket assembly (10) for rotatable mounting on a rear-wheel axle (A) and for engagement into a bicycle chain (20) with chain inner link plate pairs (21) and chain outer link plate pairs (22),
- wherein the sprocket (100) has, between an axial inner side (101) and an oppositely situated axial outer side (102), a planar sprocket body (120) and a plurality of teeth (110) formed on a circumference of the sprocket (100),
- wherein the plurality of teeth (110) comprises at least one tooth of a first tooth group (111), the axial width (B1) of said tooth being of a larger dimension than a chain inner link plate spacing (D2) and of a smaller dimension than a chain outer link plate spacing (D1), and
- comprises teeth of a second tooth group (112), the axial width (B2) of said teeth being of a smaller dimension than the chain inner link plate spacing (D2),
- wherein, viewed in a circumferential direction, at least one sequence of three teeth (110) is provided in which a tooth of the second tooth group (112), a tooth of the first tooth group (111) and another tooth of the second tooth group (112) are arranged directly one after another,
- wherein at least the one tooth of the first tooth group (111) has a projection (130) in an axial direction that is produced by a material deformation,
**characterized in that**
the proportion of the teeth of the first tooth group (111) to the total number of teeth (110) amounts to less than 50%, in particular less than 40%, in particular between 37.5% and 25%.

2. Sprocket (100) according to Claim 1,
wherein the sprocket body (120) has an axial width (B3) which substantially corresponds to the axial width (B2) of the teeth of the second tooth group (112) and which is smaller than the axial width (B1) of the at least one tooth of the first tooth group (111).

3. Sprocket (100) according to either of the preceding claims,
wherein the projection (130) is formed on the axial inner side (101) of the sprocket (100).

4. Sprocket (100) according to one of the preceding claims,
wherein the projection (130) extends in a radial direction from a tooth tip (113) as far as a tooth root (116) of the at least one tooth of the first tooth group (111).

5. Sprocket (100) according to one of the preceding claims,
wherein the projection (130) extends in a radial direction as far as, but not beyond, the root circle diameter (117).

6. Sprocket (100) according to one of the preceding claims,
wherein the projection (130), viewed in a sectional plane orthogonal to a radial line, is of a u-shaped or v-shaped form.

7. Sprocket (100) according to one of the preceding claims,
wherein the sprocket (100) respectively has, on its inner side (101), a recess (124) for receiving a chain inner link plate (21) in the region of the teeth of the second tooth group (112).

8. Sprocket (100) according to one of the preceding claims,
wherein the sprocket (100) has, on its outer side (102), a gearshift channel (126) in the form of at least one depression (127).

9. Sprocket (100) according to one of the preceding claims,
wherein the material deformation of the first projection (130) is produced from the inner side (101) or from the outer side (102).

10. Sprocket (100) according to one of the preceding claims,
wherein the material deformation of the first projection (130) is produced by impressing, in particular embossing.

11. Sprocket (100) according to one of the preceding claims,
wherein the sprocket (100) comprises an even total number of teeth (110).

12. Multi-gear sprocket assembly (10) for rotatable mounting on a rear-wheel axle (A), wherein the multi-gear sprocket assembly (10) comprises at least one sprocket (100) according to one of the preceding claims.

13. Multi-gear sprocket assembly (10) according to Claim 12,
wherein the at least one sprocket (100) is one of the large sprockets, in particular the largest and/or second-largest sprocket, of the multi-gear sprocket assembly (10).

14. Multi-gear sprocket assembly (10) according to Claim 12 or 13,
wherein the at least one sprocket (100) is formed as an individual sprocket.

15. Multi-gear sprocket assembly (10) according to Claim 14,
wherein the individual sprocket is connected to an adjacent sprocket by axially extending connecting means, in particular pins (140).

16. Multi-gear sprocket assembly (10) according to Claim 15,
wherein the individual sprocket has radially outer pin openings (104) for connection to a next-larger sprocket and/or radially inner pin openings (105) for connection to a next-smaller sprocket.

17. Bicycle transmission, comprising:
- a multi-gear sprocket assembly (10) according to one of Claims 12 to 16,
- a rear gearshift mechanism (40),
- a front chain ring assembly with at least one chain ring (30), in particular exactly one front chain ring (30), and
- a bicycle chain (10), which can be brought into engagement with the chain ring (30) and a sprocket of the multi-gear pinion assembly (10).

## Revendications

1. Pignon de chaîne (100) pour un ensemble de plusieurs pignons de chaîne (10) destiné à un montage rotatif sur un axe de roue arrière (A) et pour une mise en prise avec une chaîne de bicyclette (20) dotée de paires d'éclisses de chaîne intérieures (21) et de paires d'éclisses de chaîne extérieures (22),
- dans lequel le pignon de chaîne (100) présente entre une face intérieure axiale (101) et une face extérieure axiale (102) opposée un corps de pignon de chaîne plat (120) et une pluralité de dents (110) réalisée sur une circonférence du pignon de chaîne (100),
- dans lequel la pluralité de dents (110) comprend au moins une dent d'un premier groupe de dents (111) dont la largeur axiale (B1) est dimensionnée pour être supérieure à un espacement d'éclisses de chaîne intérieures (D2) et inférieure à un espacement d'éclisses de chaîne extérieures (D1), et
- comprend des dents d'un deuxième groupe de dents (112) dont la largeur axiale (B2) est dimensionnée pour être inférieure à l'espacement d'éclisses de chaîne intérieures (D2),
- dans lequel, vu dans la direction circonférentielle, au moins une série de trois dents (110) est prévue, dans laquelle une dent du deuxième groupe dents (112), une dent du premier groupe de dents (111) et de nouveau une dent du deuxième groupe de dents (112) sont disposées directement les unes après les autres,
- dans lequel au moins ladite une dent du premier groupe de dents (111) présente une saillie (130) dans la direction axiale, qui est fabriquée par une déformation de matière,
**caractérisé en ce que** le pourcentage des dents du premier groupe de dents (111) rapporté au nombre total de dents (110) est inférieur à 50 %, en particulier inférieur à 40 %, en particulier compris entre 37,5 % et 25 %.

2. Pignon de chaîne (100) selon la revendication 1, dans lequel le corps de pignon de chaîne (120) présente une largeur axiale (B3) qui correspond substantiellement à la largeur axiale (B2) des dents du deuxième groupe de dents (112) et est inférieure à la largeur axiale (B1) de ladite au moins une dent du premier groupe de dents (111).

3. Pignon de chaîne (100) selon l'une quelconque des revendications précédentes, dans lequel la saillie (130) est réalisée sur la face intérieure axiale (101) du pignon de chaîne (100).

4. Pignon de chaîne (100) selon l'une quelconque des revendications précédentes, dans lequel la saillie (130) s'étend dans la direction radiale depuis une tête de dent (113) jusqu'à une base de dent (116) de ladite au moins une dent du premier groupe de dents (111).

5. Pignon de chaîne (100) selon l'une quelconque des revendications précédentes, dans lequel la saillie (130) s'étend dans la direction radiale jusqu'au diamètre de pied de denture (117) mais pas au-delà de celui-ci.

6. Pignon de chaîne (100) selon l'une quelconque des revendications précédentes, dans lequel la saillie (130), vue dans le plan de coupe orthogonal à un rayon radial, est réalisée en forme de U ou de V.

7. Pignon de chaîne (100) selon l'une quelconque des revendications précédentes, dans lequel le pignon de chaîne (100) présente sur sa face intérieure (101) respectivement un évidement (124) pour loger une éclisse de chaîne intérieure (21) au niveau des dents du deuxième groupe de dents (112).

8. Pignon de chaîne (100) selon l'une quelconque des revendications précédentes, dans lequel le pignon de chaîne (100) présente sur sa face extérieure (102) un passage de changement de vitesse (126) sous la forme d'au moins un creux (127).

9. Pignon de chaîne (100) selon l'une quelconque des revendications précédentes, dans lequel la déformation de matière de la première saillie (130) est générée à partir de la face intérieure (101) ou de la face extérieure (102).

10. Pignon de chaîne (100) selon l'une quelconque des revendications précédentes, dans lequel la déformation de matière de la première saillie (130) est générée par poinçonnage, en particulier par estampage.

11. Pignon de chaîne (100) selon l'une quelconque des revendications précédentes, dans lequel le pignon de chaîne (100) comprend un nombre total pair de dents (110) .

12. Ensemble de plusieurs pignons de chaîne (10) destiné à un montage rotatif sur un axe de roue arrière (A), dans lequel l'ensemble de plusieurs pignons de chaîne (10) comprend au moins un pignon de chaîne (100) selon l'une quelconque des revendications précédentes.

13. Ensemble de plusieurs pignons de chaîne (10) selon la revendication 12, dans lequel ledit au moins un pignon de chaîne (100) est l'un des grands pignons de chaîne, en particulier le plus grand et/ou le deuxième plus grand pignon de chaîne de l'ensemble de plusieurs pignons de chaîne (10).

14. Ensemble de plusieurs pignons de chaîne (10) selon la revendication 12 ou 13, dans lequel ledit au moins un pignon de chaîne (100) est réalisé comme un pignon de chaîne unique.

15. Ensemble de plusieurs pignons de chaîne (10) selon la revendication 14, dans lequel le pignon de chaîne unique est relié à un pignon de chaîne voisin à l'aide de moyens de raccordement s'étendant axialement, en particulier de broches (140).

16. Ensemble de plusieurs pignons de chaîne (10) selon la revendication 15, dans lequel le pignon de chaîne unique présente des ouvertures de broche (104) radialement extérieures pour un raccordement à un pignon de chaîne immédiatement plus grand et/ou des ouvertures de broche (105) radialement intérieures pour un raccordement à un pignon de chaîne immédiatement plus petit.

17. Entraînement de bicyclette, comprenant :
- un ensemble de plusieurs pignons de chaîne (10) selon l'une quelconque des revendications 12 à 16,
- un mécanisme de changement de vitesse arrière (40),
- un ensemble de pignons de chaîne avant comprenant au moins un anneau de chaîne (30), en particulier exactement un anneau de chaîne (30) avant, et
- une chaîne de bicyclette (20) pouvant être mise en prise avec l'anneau de chaîne (30) et un pignon de chaîne de l'ensemble de plusieurs pignons (10).
